# EUROPÄISCHE PATENTSCHRIFT

(11) **EP 2 237 972 B1**
(45) Veröffentlichungstag und Bekanntmachung des Hinweises auf die Patenterteilung: **20.03.2013**
(21) Anmeldenummer: 08871836.6
(22) Anmeldetag: 25.11.2008
(51) Int. Cl.: B60B 33/00

(54) **LAUFSTIFT FÜR EINE ROLLE**
RUNNER PIN FOR A ROLLER
JAMBE DE ROULEMENT POUR GALET

(30) Priorität: 01.02.2008 DE 102008007445
(43) Veröffentlichungstag der Anmeldung: 13.10.2010
(73) Patentinhaber: GROSS + FROELICH GMBH&CO. KG, 71263 Weil der Stadt (DE)
(72) Erfinder: VON BORDELIUS, Ralph, 71083 Herrenberg (DE); FLIK, Oswald, 75382 Althengstett (DE)
(74) Vertreter: WOLF & LUTZ
(86) Internationale Anmeldenummer: PCT/EP2008/066116
(87) Internationale Veröffentlichungsnummer: WO 2009/095123

(56) Entgegenhaltungen:
- EP-A- 1 527 905
- GB-A- 2 182 554
- US-A- 3 249 960
- US-A- 5 568 671
- US-A1- 2003 150 080

## Beschreibung

Die Erfindung betrifft eine Rolle, insbesondere Möbelrolle, mit einem Gehäuse das mittels eines senkrecht in einer Öffnung des Gehäuses angeordneten Laufstifts an einem von der Rolle zu tragenden Gegenstand drehbar befestigt ist, wobei der Laufstift eine erste, in der Öffnung des Gehäuses angeordnete Partie und eine zweite, das Gehäuse überragende Partie aufweist.

Rollen der genannten Art werden mit der das Gehäuse überragenden Partie des Laufstifts in einem Sackloch des zu tragenden Gegenstands, beispielsweise einem Stuhlkreuz eines Bürostuhls, befestigt. Hierzu weist die das Gehäuse überragende Partie des Laufstifts eine Ringnut auf, in der ein federnder Haltering mit einem geringfügig größeren Durchmesser als das Sackloch angeordnet ist. Die das Gehäuse überragende Partie des Laufstifts wird in das Sackloch eingesteckt, wobei der Haltering radial komprimiert und die Rolle kraftschlüssig an dem Gegenstand gehalten wird. Der Haltering weist gegenüber der Ringnut des Laufstifts jedoch ein gewisses axiales und radiales Spiel auf. Wird nun beispielsweise ein Bürostuhl über einen Boden mit Unebenheiten, wie einen Fliesenboden, gerollt, so kann sich der Laufstift im Rahmen des vorhandenen Spiels innerhalb des Sacklochs auf und ab bewegen sowie eine Taumelbewegung ausführe Dies führt zu einer störenden, klingelartigen Geräuschentwicklung. Aus der gattungsgmässen EP-A-1 527 905 ist eine Rolle bekannt, deren Laufstift aus diesem Grund einen Haltering spielfrei in einer Nut einklemmt, die durch einen Absatz im Stift und eine gegenüber dem Absatz auf das Stiftende aufgesetzte Buchse aus Kunststoff gebildet ist. Sowohl der spielfreie Haltering als auch die Kunststoffbuchse sollen die unerwünschte Geräuschbildung unterdrücken. Zum einen ist die Herstellung eines derartigen Laufstifts jedoch recht aufwändig und zum anderen unterliegt die Kunststoffbuchse nach einiger Zeit einem gewissen Verschleiß, so dass der Haltering nicht mehr spielfrei in der Nut sitzt und der Laufstift wieder Spiel in dem Sackloch aufweist.

Ausgehend hiervon liegt der vorliegenden Erfindung die Aufgabe zugrunde, eine Rolle mit einem Laufstift bereitzustellen, der auf einfache Weise hergestellt und dauerhaft spielfrei in ein Sackloch eines zu tragenden Gegenstands eingesetzt werden kann.

Zur Lösung dieser Aufgabe wird die im Patentanspruch 1 angegebene Merkmalskombination vorgeschlagen. Vorteilhafte Ausgestaltungen und Weiterbildungen der Erfindung ergeben sich aus den abhängigen Ansprüchen.

Die Erfindung geht vor allem von der Erkenntnis aus, dass eine Ring-in-Nut Lösung die kostengünstigste Möglichkeit für eine praxisgerechte, lösbare Verbindung zwischen der Rolle und dem zu tragenden Gegenstand ist. Um axiale und radiale Bewegungen des Laufstifts in dem Sackloch dauerhaft zu unterbinden, wird gemäß der Erfindung daher vorgeschlagen, dass in der das Gehäuse überragenden Partie des Laufstifts mindestens zwei im Abstand voneinander angeordnete Ringnuten vorgesehen sind, in denen jeweils ein elastischer Haltering spielfrei angeordnet ist. Durch die Verwendung von zwei im Abstand voneinander angeordneten Halteringen wird eine Taumelbewegung des Laufstifts im Sackloch verhindert, durch die spielfreie Anordnung der Halteringe eine axiale Bewegung. Um eine wirksame Abstützung zu erreichen, ist die eine Nut im oberen Drittel und die mindestens eine weitere Nut im unteren Drittel der das Gehäuse überragenden Partie des Laufstifts angeordnet. Bei mehr als zwei Nuten werden diese vorteilhaft in etwa gleichen Abständen zueinander und den Enden der Partie angeordnet.

Um die Spielfreiheit des Halterings in seiner Nut zu erreichen, kann der elastische Haltering ein offener Federsprengring aus Stahl oder Kunststoff oder ein O-Ring aus Gummi oder einem anderen Elastomer sein. Da es vergleichsweise aufwändig wäre, die Breite der Nut, also den axialen Abstand der Nutflanken voneinander, und den Drahtdurchmesser eines ebenen Federsprengrings aus Stahl so exakt aufeinander abzustimmen, dass eine Spielfreiheit erreichen würde, weist die Nut in bevorzugter Ausgestaltung der Erfindung eine größere Breite auf als der Drahtdurchmesser des offenen Federsprengrings und dieser ist sowohl axial als auch radial als Feder ausgebildet und stützt sich mit Endpartien an den gegenüberliegenden Flankender Ringnut ab.

Um eine radiale Montage des Federsprengrings zu ermöglichen, weist er zweckmäßig eine Umfangserstreckung von 250° bis 300°, bevorzugt etwa 270° auf. Er kann dann auf einfache Weise seitlich in die Nut geschnappt werden. Ist der Haltering ein in sich geschlossener O-Ring aus Gummi oder einem anderen geeigneten Elastomer, so wird er axial über das Ende des Laufstifts in die entsprechende Nut geschoben.

Um die Montage- und Demontagekraft im bisherigen Rahmen zu halten, weisen die zwei Halteringe zweckmäßig eine geringere Spannkraft, vorzugsweise etwa die Hälfte, der bisher verwendeten Halteringe auf. Dies kann zum Beispiel durch eine reduzierte Drahtstärke erreicht werden, also beispielsweise eine Drahtstärke von 1,2 mm anstatt der bisherigen 1,5 mm.

Im Folgenden wird die Erfindung anhand der in der Zeichnung in schematischer Weise dargestellten Ausführungsbeispiele näher erläutert. Es zeigen
- Fig. 1: einen Laufstift für eine Rolle mit zwei Halteringen; und
- Fig. 2: zwei perspektivische Ansichten der Halteringe gemäß Fig. 1.

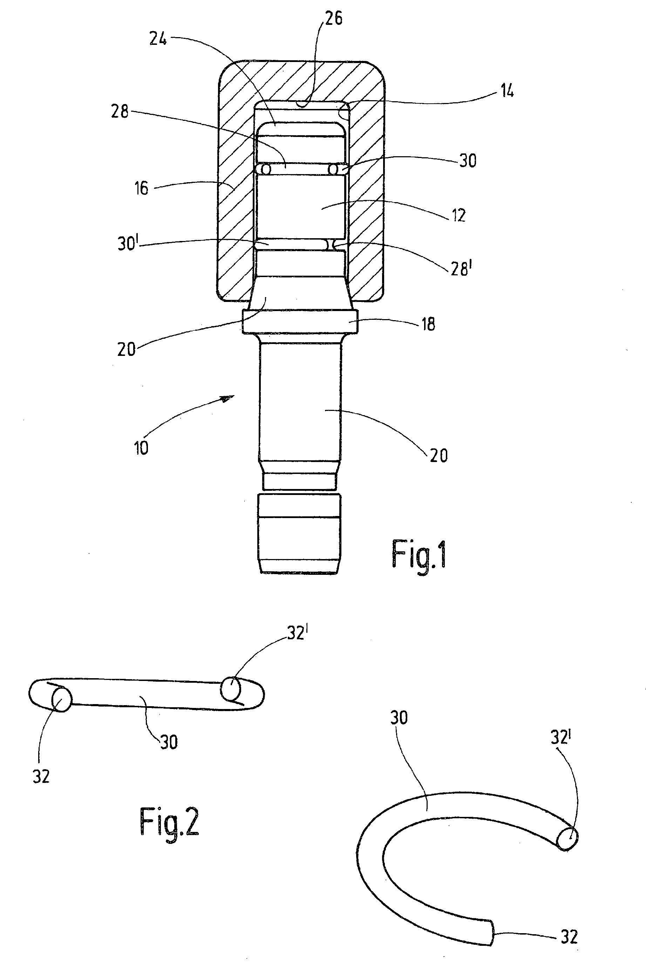

Der in Fig. 1 dargestellte Laufstift 10 einer nicht näher dargestellten Rolle allgemein bekannter Art ist mit einer Partie 12 in einem Sackloch 14 eines von der Rolle zu tragenden Gegenstands 16, beispielsweise dem Fußkreuz eines Bürostuhls, angeordnet. Die Partie 12 des Laufstifts 10 erstreckt sich bis zu einem Bund 18 etwa in der Mitte des Stifts und ist die Partie, die über das Gehäuse der Rolle übersteht, während die weitere Partie 20 des Stifts derart in eine vertikal ausgerichtete Öffnung des Rollengehäuses eingesteckt ist, dass sich das Gehäuse um die Partie 20 drehen kann. Die Partie 12 weist unmittelbar im Anschluss an den Bund 18 einen Stützkonus 20 auf, der als Anschlag für den Rand des Sacklochs 14 dient und das axiale Eintauchen der Partie 12 in das Sackloch 14 begrenzt, so dass zwischen dem Ende 24 der Partie 12 und dem Boden 26 des Sacklochs 14 ein Abstand von einigen Millimetern verbleibt.

Die Partie 12 weist zwei Nuten 28, 28' auf, in denen jeweils ein als offener Federsprengring ausgebildeter Haltering 30, 30' (Fig. 2) angeordnet ist. Die Nuten 28, 28' sind im Abstand voneinander etwa im oberen und im unteren Drittel der Partie 12 angeordnet. Die Halteringe 30, 30' sind derart aus einem Federdraht gebogen, dass sie sowohl als axiale als auch als radiale Federn wirken. Die axiale Ausdehnung der entspannten Halteringe 30, 30' ist größer als die Abstände der Flanken der Nuten 28, 28' voneinander, so dass sich die Ringe nach dem Einsetzen in die Nuten mit ihren offenen Enden 32, 32' in den Nuten verspannen. Auf diese Weise wird ein mögliches Axialspiel der Halteringe 30, 30' in den Nuten 28, 28' eliminiert. Die radiale Federkraft der Halteringe 30, 30' kommt beim Einstecken des Laufstifts 10 in das Sackloch 14 zum Tragen und sorgt für einen radial spielfreien Kraftschluss zwischen den Halteringen 30, 30' und der Innenwand des Sacklochs 14. Im Ergebnis weist der Laufstift 10 in dem Sackloch 14 weder axiales noch radiales Spiel auf. Störende Geräusche beim Überfahren unebener Böden können daher nicht entstehen.

Anstelle der in Fig. 2 dargestellten Halteringe 30, 30' können auch entsprechend gestaltete Kunststoffringe oder O-Ringe aus Gummi oder einem anderen Elastomer verwendet werden, entweder paarweise oder untereinander kombiniert, d.h. es kann beispielsweise ein Haltering 30 in einer Nut 28, 28' mit einem O-Ring in der anderen Nut kombiniert werden.

Zusammenfassend ist folgendes festzuhalten: Die Erfindung betrifft eine Rolle, insbesondere Möbelrolle, mit einem Gehäuse das mittels eines senkrecht in einer Öffnung des Gehäuses angeordneten Laufstifts 10 an einem von der Rolle zu tragenden Gegenstand 16 drehbar befestigt ist, wobei der Laufstift 10 eine erste, in der Öffnung des Gehäuses angeordnete Partie 20 und eine zweite, das Gehäuse überragende Partie 12 aufweist. Um auf einfache und kostengünstige Weise einen Laufstift zu schaffen, der dauerhaft eine störende Geräuschentwicklung durch Relativbewegungen zwischen dem Laufstift und dem zu tragenden Gegenstand unterbindet, wird gemäß der Erfindung vorgeschlagen, dass in der das Gehäuse überragenden Partie 12 des Laufstifts 10 mindestens zwei im Abstand voneinander angeordnete Ringnuten 28, 28' vorgesehen sind, in denen jeweils ein elastischer Haltering 30, 30' spielfrei angeordnet ist.

## Patentansprüche

1. Rolle, insbesondere Möbelrolle, mit einem Gehäuse das mittels eines senkrecht in einer Öffnung des Gehäuses angeordneten Laufstifts (10) an einem von der Rolle zu tragenden Gegenstand (16) drehbar befestigt ist, wobei der Laufstift (10) eine erste, in der Öffnung des Gehäuses angeordnete Partie (20) und eine zweite, das Gehäuse überragende Partie (12) aufweist, **dadurch gekennzeichnet, dass** in der das Gehäuse überragenden Partie (12) des Laufstifts (10) mindestens zwei im Abstand voneinander angeordnete Ringnuten (28, 28') vorgesehen sind, in denen jeweils ein elastischer Haltering (30, 30') spielfrei angeordnet ist.

2. Rolle nach Anspruch 1, **dadurch gekennzeichnet, dass** der elastische Haltering (30, 30') ein offener Federsprengring aus Stahl oder Kunststoff oder ein O-Ring aus Gummi oder einem anderen Elastomer ist.

3. Rolle nach Anspruch 2, **dadurch gekennzeichnet, dass** sich der als offener Federsprengring aus Stahl ausgebildete Haltering (30, 30') mit Endpartien (32, 32') an gegenüberliegenden Flanken der Ringnut (28, 28') abstützt.

4. Rolle nach Anspruch 2 oder 3, **dadurch gekennzeichnet, dass** der Federsprengring (30, 30') eine Umfangserstreckung von 250° bis 300°, bevorzugt 270° aufweist.

## Claims

1. A caster, in particular for furniture, having a housing which is rotatably connected to an object (16) carried by the caster by means of a caster stem (10), wherein the caster stem (10) comprises a first portion (20) which is inserted into an opening in the housing and a second portion (12) which projects out of the housing, **characterized in that** the portion (12) which projects out of the housing comprises at least two annular grooves (28, 28') which are spaced apart from each other, in each of which there is disposed an elastic ring (30, 30') without free play.

2. The caster of claim 1, **characterized in that** the elastic ring (30, 30') is an open spring circlip made of steel or plastic, or an O-ring made of rubber or some other elastomer.

3. The caster of claim 2, **characterized in that** the ring (30, 30') which is formed as an open spring circlip made of steel bears with end portions (32, 32') against opposing side walls of the annular groove (28, 28').

4. The caster of claim 2 or 3, **characterized in that** the spring circlip (30, 30') has a circumferential extension of 250° to 300°, preferably 270°.

## Revendications

1. Roulette, en particulier roulette de mobilier munie d'un boîtier fixé de manière rotative, au moyen d'une jambe de roulement (10) disposée verticalement dans un orifice dudit boîtier, à un objet (16) devant être porté par ladite roulette, ladite jambe de roulement (10) comprenant une première partie (20) logée dans ledit orifice du boîtier, et une seconde partie (12) faisant saillie au-delà dudit boîtier, **caractérisée par** la présence, dans la partie (12) de la jambe de roulement (10) en saillie au-delà du boîtier, d'au moins deux rainures annulaires (28, 28') situées à distance l'une de l'autre, dans lesquelles une bague élastique de retenue (30, 30') est respectivement disposée avec absence de jeu.

2. Roulette selon la revendication 1, **caractérisée par le fait que** la bague élastique de retenue (30, 30') est un circlip de type ouvert, en acier ou en matière plastique, voire une bague torique en caoutchouc ou en un autre élastomère.

3. Roulette selon la revendication 2, **caractérisée par le fait que** la bague de retenue (30, 30'), réalisée sous la forme d'un circlip en acier de type ouvert, est en appui, par des parties d'extrémité (32, 32'), contre des flancs de la rainure annulaire (28, 28') tournés à l'opposé.

4. Roulette selon la revendication 2 ou 3, **caractérisée par le fait que** le circlip (30, 30') présente une étendue périphérique de 250° à 300°, de préférence de 270°.
